# EUROPEAN PATENT SPECIFICATION

(11) **EP 0 613 314 B1**
(45) Date of publication and mention of the grant of the patent: **07.11.2001**
(21) Application number: 94300510.8
(22) Date of filing: 24.01.1994
(51) Int. Cl.: H04Q 7/38, H04M 1/72

(54) **Cellular telephone**
Zellulartelefon
Téléphone cellulaire

(30) Priority: 25.01.1993 JP 1025893
(43) Date of publication of application: 31.08.1994
(73) Proprietor: NEC CORPORATION, Tokyo (JP)
(72) Inventor: Seo, Mitsuyo, c/o NEC Corporation, Minato-ku, Tokyo (JP)
(74) Representative: Moir, Michael Christopher

(56) References cited:
- WO-A-91/07836
- DE-A- 3 333 587
- PATENT ABSTRACTS OF JAPAN vol. 12, no. 362 (E-663) 28 September 1988 & JP-A-63 115 440 (NISSAN)

## Description

### BACKGROUND OF THE INVENTION

### 1. FIELD OF THE INVENTION

The present invention relates to a foldable cellular telephone.

### 2. DESCRIPTION OF THE PRIOR ART

Conventionally, a cellular telephone (mobile phone) which is also for use in a car has a response holding function for informing a caller, if the incoming call is received when the user is busy driving, that he/she cannot respond to the call. For example, a message, eg. "I CANNOT RESPOND TO THE CALL NOW" is sent. In many cases, a ten-key switch (including a function key) of the cellular telephone also serves as a response holding switch. For example, an end key is operated upon reception of an incoming call to set the response holding state, thereby automatically transmitting a message as described above.

In such a cellular telephone, the ten keys are arranged with small spacings therebetween, so that it is difficult for the user to depress one particular key of the ten keys whilst driving the car. Especially, in a cellular telephone having a foldable structure, when an incoming call is received in a folded state, two operations are required to set the response holding state. That is, the cellular telephone must be first opened, and one special key of the ten keys must be subsequently depressed. Performing these operations during driving certainly diverts the driver's attention and can be dangerous.

WIPO Publication No. WO 91/07836 discloses a cellular telephone having a foldable body and a vehicle adaptor circuit that allows the function of a built-in microphone and speaker in the telephone to be transferred to an external microphone and speaker for hands-free operation.

German Patent No. DE-A-3 333 587 A1 and Japanese Publication No. JP-A-63 115 440 disclose that telephone calls to persons in vehicles may be placed into an automatic holding state. In the German reference, the holding state is activated beforehand by the driver, while in the Japanese reference the holding state is activated by sensing of vehicle motion.

### SUMMARY OF THE INVENTION

The present invention has been made in consideration of the above situation, and has as its object to provide a cellular telephone with a more easily-operated response holding state.

According to the invention, there is provided a foldable cellular telephone that has a microphone, a speaker, a foldable telephone main body, a control unit for transmitting/receiving a control connection signal, and an external interface connector connected to an external interface plug. The foldable cellular telephone includes: means for detecting an open/closed state of said foldable telephone main body and means for notifying said control unit of the state; means for detecting that said external interface connector is connected to said external interface plug and means for notifying said control unit whether said external interface connector is connected; and, means, arranged in said control unit, for setting a response holding state when an incoming call is received in a state wherein said external interface plug is connected to said external interface connector and said foldable telephone main body is opened.

When an incoming call is received in a state wherein the external interface connector is connected to the external interface plug, a response holding state is set only by opening the folded telephone main body. At this time, a message, e.g. "I CANNOT RESPOND TO THE CALL NOW. PLEASE HOLD ON" (example) is automatically sent. When the external interface plug is not connected to the external interface connector, a "normally available" state is detected so that the telephone responds normally to an incoming call and does not automatically set the response holding state.

Therefore, according to the present invention, when the user is driving, a response holding state can be easily set by a simple operation of opening the cellular telephone, thereby ensuring safety.

The above and other advantages, features and additional objects of the present invention will become manifest to those versed in the art upon making reference to the following detailed description and accompanying drawings in which preferred structural embodiments incorporating the principles of the present invention are shown by way of illustrative example.

### BRIEF DESCRIPTION OF THE DRAWINGS

Fig. 1 is a block diagram showing the functional arrangement of a cellular telephone and connected external interface plug and onboard adaptor according to an embodiment of the present invention;

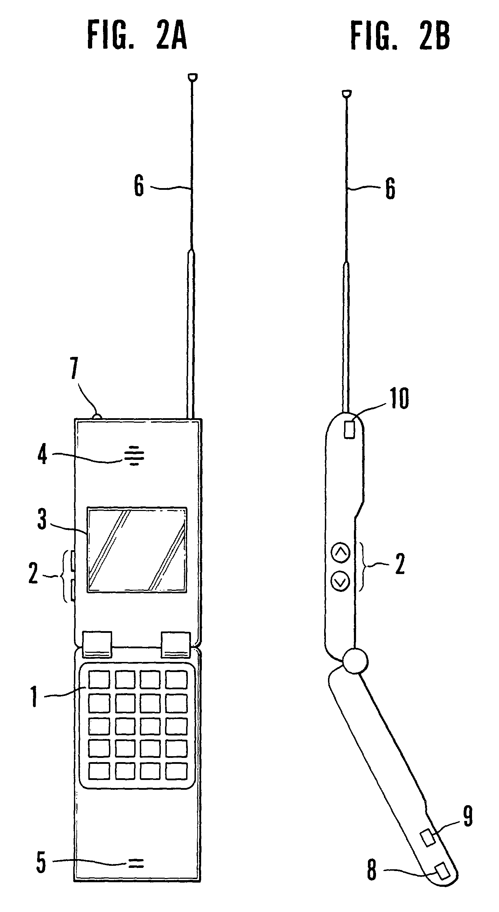

Figs. 2A and 2B are respective front and left-side views of the cellular telephone of the embodiment of the present invention, the telephone being shown in the unfolded state; and,
Fig. 3 is a side view of the cellular telephone of the embodiment of the present invention, the telephone being shown in the folded state and connected to an onboard adaptor.

### DETAILED DESCRIPTION OF PREFERRED EMBODIMENT

A preferred embodiment of the present invention will be described below with reference to the accompanying drawings.

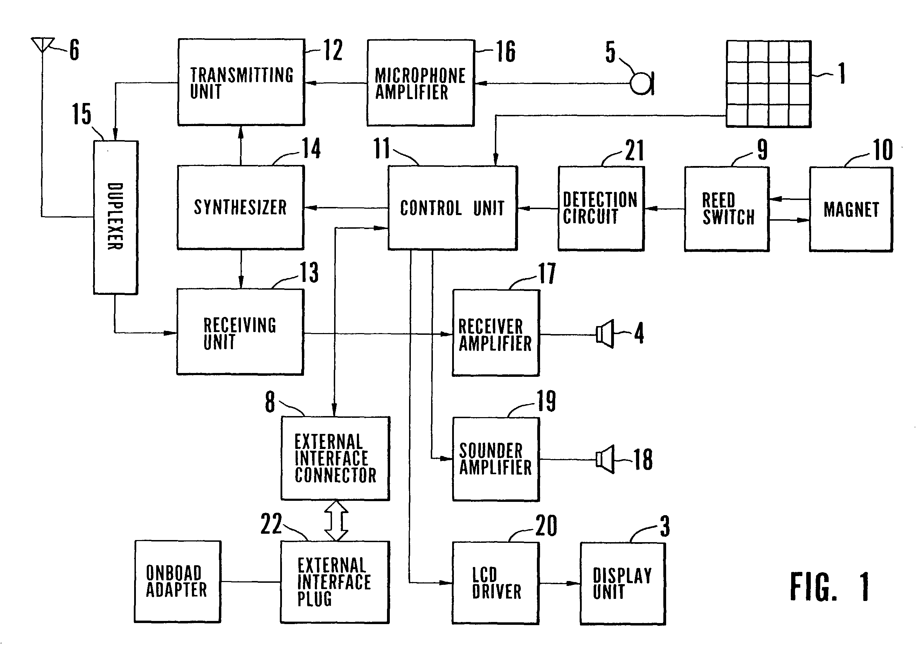

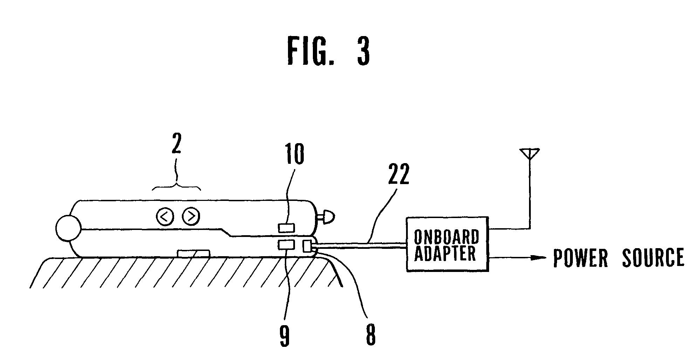

A cellular telephone according to an embodiment of the present invention is connected with an onboard adapter in a folded state, as shown in Fig. 3. As shown in Fig. 1, the entire arrangement has a microphone 5, a speaker 4, an antenna 6, duplexer 15, a transmitting unit 12, a receiving unit 13, a synthesizer 14, a microphone amplifier 16, a ten-key switch 1, a receiver amplifier 17, a sounder amplifier 19, a sounder (bleeper) 18, an LCD driver 20, a display unit 3, an external interface connector 8 connected to an external interface plug 22, and a control unit 11 for transmitting/receiving a connection control signal. As a characteristic feature of this embodiment of the present invention, the cellular telephone has a magnet 10, a reed switch 9, and a detection circuit 21 constituting a means for detecting an open/closed state of a foldable structure and notifying it to the control unit 11, and a means for detecting that the external interface connector 8 is connected to the external interface plug 22 and notifying it to the control unit 11. The control unit 11 includes a means for setting a response holding state when an incoming call is received in a state wherein the external interface plug 22 is connected and the foldable structure is open.

An operation of the embodiment of the present invention will be described below.

When the cellular telephone is closed, the reed switch 9 comes close to the magnet 10 and turned on (closed), as shown in Fig. 3. On the other hand, when the cellular telephone is opened, the reed switch 9 is remote from the magnet 10 and turned off (opened). The ON/OFF state of the reed switch 9 is detected by the detection circuit 21 and transmitted to the control unit 11. If the external interface connector 8 is connected to the external interface plug 22, an indication thereof is also transmitted to the control unit 11.

When an incoming call is received in a state wherein the external interface connector 8 is connected to the external interface plug 22, and the control unit 11 recognizes that the cellular telephone is opened upon reception of the incoming call, the control unit 11 determines that the telephone is for the time being in a car and starts a response holding sequence to set a response holding state. The cellular telephone sends a message "DRIVING NOW. PLEASE HOLD ON" to the caller. Thereafter, when the user decides that he wishes to speak and depresses the start key, the synthesizer 14 is operated to set a speech communication state.

If the external interface connector 8 is not connected to the external interface plug 22, the control unit 11 recognizes that state and does not set the response holding state even when the case is unfolded. In this case, the control unit 11 sets a state such that a response to an incoming call can be immediately be made as in a conventional cellular telephone.

As described above, when an incoming call is received in a state wherein the external interface connector 8 is connected to the external interface plug 22 of the car, and at the same time, the user is fully occupied in driving, the response holding state can be set by the very simple operation of opening the cellular telephone.

## Claims

1. A foldable cellular telephone having a microphone (5), a speaker (4), a foldable telephone main body, a control unit (11) for transmitting/ receiving a control connection signal, and an external interface connector (8) connectable to an external interface plug (22), comprising:
means (9, 10) for detecting an open/closed state of said foldable telephone main body and means (21) for notifying said control unit of the state; and,
means for detecting that said external interface connector (8) is connected to said external interface plug (22) and means for notifying said control unit whether said external interface connector is connected;
**characterized by** also comprising:
means, arranged in said control unit, for setting a response holding state when an incoming call is received in a state wherein said external interface plug is connected to said external interface connector and said foldable telephone main body is opened.

## Patentansprüche

1. Zusammenklappbares Cellular-Telefon mit einem Mikrofon (5), einem Lautsprecher (4), einem zusammenklappbaren Telefonhauptkörper, einer Steuereinheit (11) zum Senden/Empfangen eines Steuerverbindungssignals und einem Verbinder (8) für externe Schnittstellen, der mit einem externen Schnittstellenstecker (22) verbindbar ist, das aufweist:
Mittel (9, 10) zum Detektieren eines Offen/Geschlossen-Zustands des zusammenklappbaren Telefonhauptkörpers und Mittel (21) zum Benachrichtigen der Steuereinheit über den Zustand; und
Mittel zum Detektieren, das der Verbinder (8) für externe Schnittstellen mit dem externen Schnittstellenstecker (22) verbunden ist, und Mittel zum Benachrichtigen der Steuereinheit, ob der Verbinder für externe Schnittstellen verbunden ist;
**dadurch gekennzeichnet, daß** es auch aufweist:
Mittel, die in der Steuereinheit angeordnet sind, um einen Antworthaltezustand einzustellen, wenn ein ankommender Ruf in einem Zustand empfangen wird, bei dem der externe Schnittstellenstecker mit dem Verbinder für externe Schnittstellen verbunden ist und der zusammenklappbare Telefonhauptkörper geöffnet ist.

## Revendications

1. Téléphone cellulaire pliable ayant un microphone (5), un haut-parleur (4), un corps principal de téléphone pliable, une unité de commande (11) pour transmettre/recevoir un signal de connexion de commande, et un connecteur d'interface externe (8) connectable à une fiche d'interface externe (22), comprenant:
- des moyens (9, 10) pour détecter un état ouvert/fermé dudit corps principal de téléphone pliable et un moyen (21) pour notifier l'état à ladite unité de commande; et
- des moyens pour détecter que ledit connecteur d'interface externe (8) est connecté à ladite fiche d'interface externe (22) et un moyen pour notifier à ladite unité de commande si oui ou non ledit connecteur d'interface externe est connecté;
**caractérisé par** ce qu'il comprend également:
- un moyen, disposé dans ladite unité de commande, pour fixer un état de maintien de réponse quand un appel entrant est reçu dans un état dans lequel ladite fiche d'interface externe est connectée audit connecteur d'interface externe et ledit corps principal du téléphone pliable est ouvert.
